# EUROPÄISCHE PATENTSCHRIFT

(11) **EP 0 881 115 B1**
(45) Veröffentlichungstag und Bekanntmachung des Hinweises auf die Patenterteilung: **19.11.2003**
(21) Anmeldenummer: 98102578.6
(22) Anmeldetag: 14.02.1998
(51) Int. Cl.: B60N 2/02

(54) **Sitzeinstellvorrichtung und Audiogerät.**
Seat adjusting device and car radio.
Dispositif de réglage d'un siège et autoradio.

(30) Priorität: 27.05.1997 DE 19722033
(43) Veröffentlichungstag der Anmeldung: 02.12.1998
(73) Patentinhaber: ROBERT BOSCH GMBH, 70442 Stuttgart (DE)
(72) Erfinder: Hager, Klaus, 73650 Winterbach (DE)

(56) Entgegenhaltungen:
- EP-A- 0 414 121
- DE-A- 3 609 690
- DE-A- 4 339 113
- DE-A- 19 522 897
- US-A- 4 997 053
- PATENT ABSTRACTS OF JAPAN vol. 13, no. 373 (M-861), 18. August 1989 -& JP 01 127425 A (TOSHIBA CORP), 19. Mai 1989

## Beschreibung

### Stand der Technik

Die Erfindung geht von einer Sitzeinstellvorrichtung nach der Gattung des unabhängigen Anspruchs 1 und einem Audiogerät nach der Gattung des unabhängigen Anspruchs 5 aus.

Aus der DE-A-36 09 690 ist bereits eine Sitzeinstellvorrichtung für einen mit einer Antriebsvorrichtung verstellbaren Sitz bekannt, die eine Speichereinrichtung zum Speichern einer vorgegebenen optimalen Einstellung des Sitzes und Mittel, mit deren Hilfe ein gewünschter Datensatz aus mehreren optimalen Einstellungen adressierbar ist, aufweist.

Aus dem Katalog "Mobile Audiosysteme '95/'96" der Firma Blaupunkt ist eine Chipkarte für Autoradios bekannt, die einen Speicherchip umfasst, auf dem individuelle Gerätegrundeinstellungen gespeichert werden können.

### Vorteile der Erfindung

Die erfindungsgemäße Sitzeinstellvorrichtung mit den Merkmalen des unabhängigen Anspruchs 1 hat demgegenüber den Vorteil, daß sie zusätzlich die Funktion erfüllt, mindestens einen Speicherbereich einer einem Audiogerät zugeordneten zweiten Speichereinrichtung zu adressieren, in der benutzerspezifische Einstellungen des Audiogerätes abgespeichert sein können. Auf diese Weise wird der Bedienkomfort für den Benutzer beispielsweise eines die Sitzeinstellvorrichtung und das Audiogerät umfassenden Kraftfahrzeuges deutlich erhöht, da der Benutzer auf eine Vielzahl individueller Einstellungen in seinem Kraftfahrzeug mit nur einem Bedienvorgang Zugriff hat.

Ein weiterer Vorteil besteht darin, daß durch Zentralisierung des Speicherzugriffs für die erste Speichereinrichtung und den mindestens einen Speicherbereich der dem Audiogerät zugeordneten zweiten Speichereinrichtung Material, Platzaufwand und Herstellungskosten eingespart werden.

Durch die in den abhängigen Ansprüchen 2 bis 4 aufgeführten Maßnahmen sind vorteilhafte Weiterbildungen und Verbesserungen der im unabhängigen Anspruch 1 angegebenen Sitzeinstellvorrichtung möglich.

Als Vorteil ist dabei anzusehen, daß eine Speichervorrichtung vorgesehen ist, mit deren Hilfe ein Signal zur Aktivierung eines Speichervorgangs gerade eingestellter Bedienfunktionen des Audiogerätes in einem gerade adressierten Speicherbereich der zum Audiogerät gehörenden zweiten Speichereinrichtung abgebbar ist und eine erfasste Sitzeinstellung in Form eines Datensatzes der mehreren optimalen Sitzeinstellungen in der ersten Speichereinrichtung speicherbar ist. Auf diese Weise wird die Funktionalität der Sitzeinstellvorrichtung weiter erhöht und der Bedienkomfort für den Benutzer weiter verbessert. Außerdem werden durch die Zentralisierung der Speichervorgänge in einer Speichervorrichtung wiederum Material, Platz und Kosten eingespart.

Ein weiterer Vorteil besteht darin, daß eine Aktiviervorrichtung vorgesehen ist, mit deren Hilfe ein Signal zur Aktivierung von in einem adressierten Speicherbereich der dem Audiogerät zugeordneten zweiten Speichereinrichtung abgelegten Bedienfunktionen abgebbar ist und eine optimale Einstellung des Sitzes gemäß eines in der ersten Speichereinrichtung adressierten Datensatzes einleitbar ist. Auch durch diese Maßnahme wird die Funktionalität der Sitzeinstellvorrichtung erhöht und der Bedienkomfort für den Benutzer verbessert. Durch die gemeinsame Nutzung einer Aktiviervorrichtung für die Aktivierung von Bedienfunktionen für das Audiogerät und das Einleiten der optimalen Einstellung des Sitzes werden wiederum Material, Platz und Kosten eingespart.

Besonders vorteilhaft ist es, daß die Abgabe von Signalen an das Audiogerät drahtlos erfolgt. Auf diese Weise sind keine störenden Verbindungskabel erforderlich und der Materialaufwand für Verbindungskabel sowie die dafür erforderlichen Kosten können entfallen. Platz für die Unterbringung eines Verbindungskabels ist nicht erforderlich.

Das erfindungsgemäße Audiogerät mit den Merkmalen des unabhängigen Anspruchs 5 hat den Vorteil, daß aufgrund der externen Signalzuführung zur Adressierung des mindestens einen Speicherbereichs entsprechende Bedien- und/oder Eingabevorrichtungen, beispielsweise für Chipkarten nicht erforderlich sind, siehe z.B. EP-A-0 414 121, so daß Material, Platz auf der Bedienfront und im Audiogerät selbst und Kosten eingespart werden und die Bedienfront des Audiogerätes zugleich übersichtlicher gestaltet werden kann, so daß auch der Bedienkomfort für den Benutzer erhöht wird.

Durch die in den abhängigen Ansprüchen 6 bis 8 aufgeführten Maßnahmen sind vorteilhafte Weiterbildungen und Verbesserungen des im unabhängigen Anspruch 5 angegebenen Audiogerätes möglich.

Besonders vorteilhaft ist es, das Geräteeinstellungen über ein extern zugeführtes Signal in einem adressierten Speicherbereich abspeicherbar sind. Auf diese Weise sind am Audiogerät auch keine Bedienelemente zur Speicherung dieser Geräteeinstellung erforderlich, so daß wiederum Material, Platz und Kosten eingespart werden und die Übersichtlichkeit der Bedienfront des Audiogerätes und der Bedienkomfort für den Benutzer weiter erhöht werden.

Vorteilhaft ist ebenfalls, daß in einem adressierten Speicherbereich abgespeicherte Geräteeinstellungen über ein extern zugeführtes Signal am Audiogerät aktivierbar sind. Auf diese Weise werden zur Aktivierung dieser Geräteeinstellungen ebenfalls keine Bedienelemente am Audiogerät benötigt, so daß wiederum Material, Platz und Kosten eingespart werden und die Übersichtlichkeit der Bedienfront und dadurch der Bedienkomfort für den Benutzer erhöht werden.

Besonders vorteilhaft ist es, daß die externen Signale dem Audiogerät drahtlos zugeführt sind. Auf diese Weise werden störende Verbindungskabel und damit auch Material und Kosten eingespart, genauso wie der für die Verlegung der Verbindungskabel benötigte Platz.

### Zeichnung

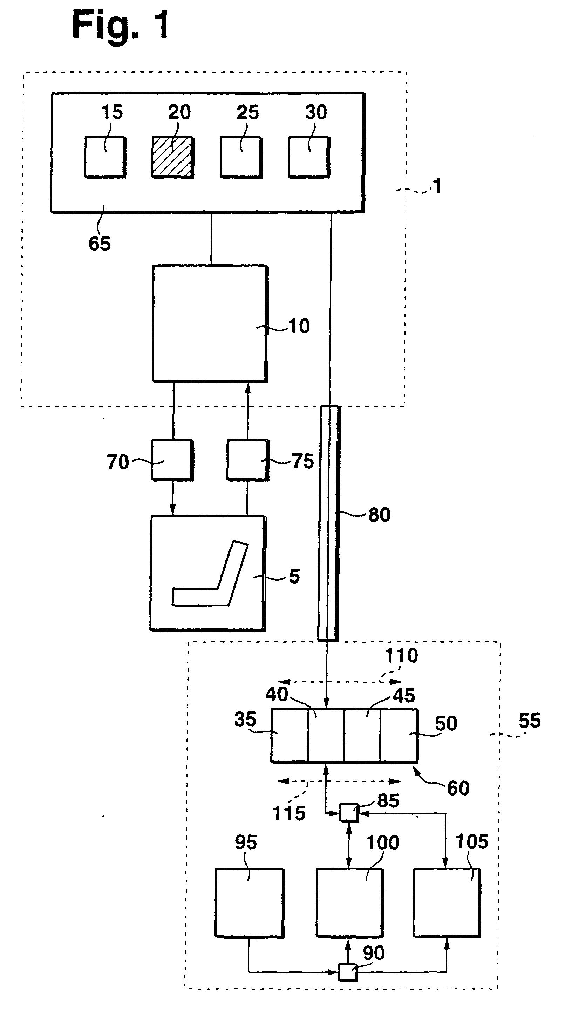

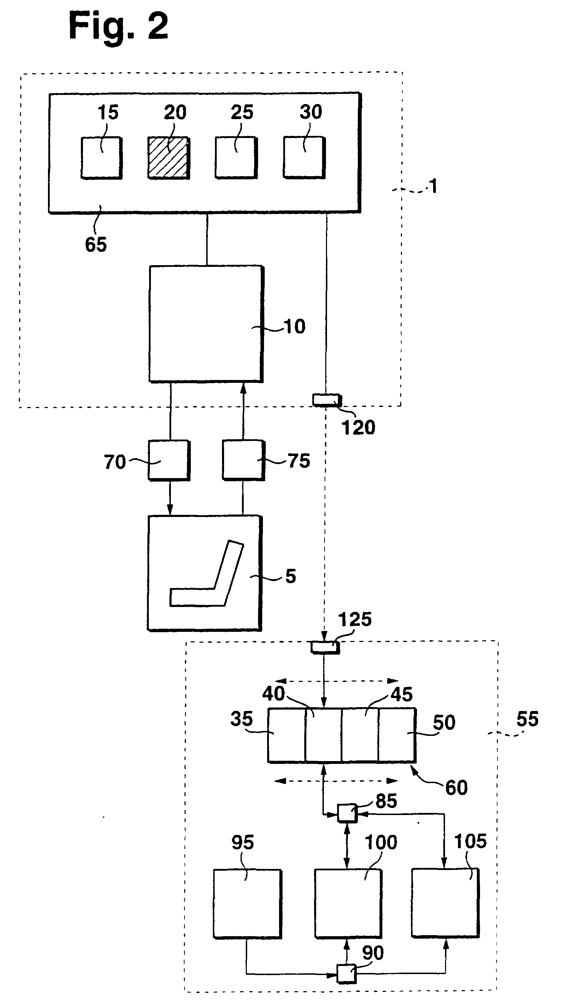

Ausführungsbeispiele der Erfindung sind in der Zeichnung dargestellt und in der nachfolgenden Beschreibung näher erläutert. Es zeigen Figur 1 ein Blockschaltbild einer Sitzeinstellvorrichtung, die über ein Verbindungskabel mit einem Audiogerät verbunden ist, und Figur 2 ein Blockschaltbild einer Sitzeinstellvorrichtung, die drahtlos mit einem Audiogerät zusammenwirkt.

### Beschreibung der Ausführungsbeispiele

In Figur 1 kennzeichnet 1 eine Sitzeinstellvorrichtung. Die Sitzeinstellvorrichtung 1 umfasst ein Bedienteil 65 mit einem ersten Bedienelement 15, einem zweiten Bedienelement 20, einem dritten Bedienelement 25 und einem vierten Bedienelement 30. Das Bedienteil 65 ist mit einer ersten Speichereinrichtung 10 verbunden, die ebenfalls in der Sitzeinstellvorrichtung 1 angeordnet ist. Die erste Speichereinrichtung 10 ist einerseits über eine Sitzverstelleinrichtung 70 und andererseits über eine Einstellungserfassungseinrichtung 75 mit einem über eine Antriebsvorrichtung verstellbaren Sitz 5 verbunden. Die Sitzeinstellvorrichtung 1 ist über ein Kabel 80 mit einem als Autoradio ausgebildeten Audiogerät 55 verbunden. Dabei ist über das Kabel 80 eine zweite Speichereinrichtung 60 des Autoradios 55 an das Bedienteil 65 angeschlossen. Die zweite Speichereinrichtung 60 umfasst dabei einen ersten Speicherbereich 35, einen zweiten Speicherbereich 40, einen dritten Speicherbereich 45 und einen vierten Speicherbereich 50. Je nach Bedarf können auch mehr oder weniger als vier Speicherbereiche 35, 40, 45, 50 vorgesehen sein. Dasselbe gilt für die Anzahl der Bedienelemente 15, 20, 25, 30 des Bedienteils 65, die jedoch der Anzahl der Speicherbereiche 35, 40, 45, 50 der zweiten Speichereinrichtung 60 entsprechen sollte, damit jeder Speicherbereich 35, 40, 45, 50 durch ein ihm zugeordnetes Bedienelement 15, 20, 25, 30 adressierbar ist. Es ist jedoch auch denkbar, statt der Bedienelemente 15, 20, 25, 30 eine andere Eingabevorrichtung zur Adressierung der Speicherbereiche 35, 40, 45, 50 am Bedienteil 65 vorzusehen, beispielsweise einen Drehregler mit entsprechender Anzahl von Drehpositionen oder eine numerische Tastatur, die auch zwei- und mehrstellige Zahlenangaben ermöglicht, mit einem Display zur Kontrolle der zur Adressierung des gewünschten Speicherbereichs 35, 40, 45, 50 eingegebenen Zahl.

Gemäß der Darstellung nach Figur 1 ist der zweite Speicherbereich 40 durch das Bedienteil 65 adressiert. Es kann jedoch jeder der vier Speicherbereiche 35, 40, 45, 50 durch das Bedienteil 65 adressiert werden, wie durch einen ersten gestrichelten Doppelpfeil 110 dargestellt ist. Die zweite Speichereinrichtung 60 ist weiterhin über ein erstes Verknüpfungsglied 85 mit einem Klangsteller 100 und einem Tuner 105 verbunden. Eine Bedienvorrichtung 95 des Autoradios 55 ist über ein zweites Verknüpfungsglied 90 ebenfalls mit dem Klangsteller 100 und dem Tuner 105 des Autoradios 55 verbunden, wobei der Klangsteller 100 und der Tuner 105 ebenfalls im Autoradio 55 angeordnet sind. Gemäß der Adressierung des zweiten Speicherbereichs 40 durch das Bedienteil 65 greift auch das erste Verknüpfungsglied 85 auf den zweiten Speicherbereich 40 zu. Dabei kann gemäß einem zweiten gestrichelten Doppelpfeil 115 das erste Verknüpfungsglied 85 ebenfalls auf jeden der vier Speicherbereiche 35, 40, 45, 50 zugreifen.

Die Funktionsweise der Sitzeinstellvorrichtung 1 wird im folgenden beschrieben. Die Sitzeinstellvorrichtung 1 und das Autoradio 55 sind in einem Kraftfahrzeug untergebracht. Der Benutzer des Kraftfahrzeugs hat die Möglichkeit, den Sitz 5 des Kraftfahrzeugs durch eine in Figur 1 nicht dargestellte manuelle oder elektronische Einstellvorrichtung in der einem Fachmann beispielsweise aus der DE 36 09 690 A1 bekannten Weise einzustellen. Eine aktuelle Einstellung des Sitzes 5 wird von der Einstellungserfassungseinrichtung 75 erfasst und durch Betätigung eines der vier Bedienelemente 15, 20, 25, 30 als entsprechender Datensatz in der ersten Speichereinrichtung 10 abgespeichert. Um diesen Speichervorgang einzuleiten, muß das entsprechende Bedienelement 15, 20, 25, 30 mindestens für eine erste vorgegebene Zeit betätigt werden. Gemäß der schraffierten Darstellung in Figur 1 wurde das zweite Bedienelement 20 betätigt. Dadurch wird außerdem der zweite Speicherbereich 40 des Autoradios 55 durch das Bedienteil 65 adressiert. An der Bedienvorrichtung 95 können vom Benutzer Klangeinstellungen des Autoradios 55, wie Höhen, Tiefen, Lautstärke sowie eine bestimmte Sendefrequenz eingestellt werden, die am Klangsteller 100 bzw. am Tuner 105 realisiert werden. Durch Betätigung des zweiten Bedienelementes 20 für die mindestens erste vorgegebene Zeit werden diese Klang- und Frequenzeinstellungen im zweiten Speicherbereich 40 der zweiten Speichereinrichtung 60 abgespeichert. Es ist auch möglich, am Bedienteil 65 zusätzlich eine Speichertaste vorzusehen, wobei dann die Adressierung des entsprechenden Speicherbereichs 35, 40, 45, 50 nach wie vor durch Betätigung des entsprechend zugeordneten Bedienelementes 15, 20, 25, 30 erfolgt, der Speichervorgang jedoch zusätzlich eine Betätigung der Speichertaste erfordert. In diesem Fall ist für die Betätigung des entsprechenden Bedienelementes 15, 20, 25, 30 keine Zeitvorgabe zu erfüllen.

Die erfindungsgemäße Sitzeinstellvorrichtung und das erfindungsgemäße Autoradio eignen sich besonders für den Einbau in Kraftfahrzeugen, die von mehreren Benutzern genutzt werden. Dabei können dann die einzelnen Benutzer ihre individuellen optimalen Sitzeinstellungen und Klang- und Frequenzeinstellungen des Autoradios 55 abspeichern. Beim Einsteigen in das Kraftfahrzeug kann der Benutzer dann das ihm zugeordnete Bedienelement 15, 20, 25, 30 für eine Zeit, die unter der ersten vorgegebenen Zeit liegt betätigen. Dadurch erfolgt eine Aktivierung der im zugehörigen Speicherbereich 35, 40, 45, 50 abgespeicherten Klang- und Frequenzeinstellungen des Autoradios 55 sowie einer benutzerspezifischen Sitzeinstellung mittels des entsprechend adressierten Datensatzes in der ersten Speichereinrichtung 10. Somit dienen bei dem beschriebenen Ausführungsbeispiel die Bedienelemente 15, 20, 25, 30 sowohl der Adressierung des entsprechenden Speicherbereichs 35, 40, 45, 50 der 2. Speichereinrichtung 60 und des entsprechenden Datensatzes in der ersten Speichereinrichtung 10 als auch als Speichervorrichtung zur Abspeicherung aktueller Autoradio- bzw. Sitzeinstellungen und als Aktiviervorrichtung zur Einstellung individueller Sitzpositionen und Geräteeinstellungen des Autoradios 55. Es ist jedoch auch möglich, am Bedienteil 65 zur Bestätigungstaste vorzusehen, deren Betätigung nach Adressierung eines Speicherbereichs 35, 40, 45, 50 durch ein Bedienelement 15, 20, 25, 30 des Bedienteils 65 zur Aktivierung der benutzerspezifischen Geräteeinstellung also im beschriebenen Beispiel der Klangeinstellungen und der Frequenzeinstellungen des Autoradios 55 sowie mittels des entsprechend adressierten Datensatzes in der ersten Speichereinrichtung 10 benutzerspezifische Sitzeinstellungen führt.

Im beschriebenen Ausführungsbeispiel ist in Figur 1 durch die Schraffur des zweiten Bedienelementes 20 angedeutet, daß dieses zweite Bedienelement 20 betätigt wurde, so daß der zweite Speicherbereich 40 adressiert wird und für den Fall einer Aktivierung die dort gespeicherten Klang- und Frequenzeinstellungen an den Klangsteller 100 bzw. an den Tuner 105 weitergeleitet und dort realisiert werden. Außerdem wird für diesen Fall in der ersten Speichereinrichtung 10 der dem zweiten Bedienelement 20 zugeordnete Datensatz mit den entsprechend optimalen Sitzeinstellungen adressiert und diese Sitzeinstellungen von der Sitzverstellungseinrichtung 70 am Sitz 5 vorgenommen. Dabei kann die erste Speichereinrichtung 10 analog zur zweiten Speichereinrichtung 60 in vier Speicherbereiche aufgeteilt sein, in denen jeweils der entsprechende Datensatz gespeichert ist. Die Adressierung erfolgt dann wie bei der zweiten Speichereinrichtung 60. Selbstverständlich können die Klang- und Frequenzeinstellungen des Autoradios 55 jederzeit über die Bedienvorrichtung 95 geändert werden. Dasselbe gilt für die Sitzeinstellungen des Sitzes 5, die über die in Figur 1 nicht dargestellte Einstellvorrichtung ebenfalls jederzeit geändert werden können. Für den Fall, daß eine gemäß einem adressierten Speicherbereich 35, 40, 45, 50 einzustellende Frequenz am Tuner 105 nicht im Sendebereich eines bei dieser Frequenz arbeitenden Rundfunksenders liegt, kann über eine Suchlaufvorrichtung eine Empfangsfrequenz eines ausreichend gut empfangbaren Rundfunksenders ausgewählt werden.

In einem weiteren Ausführungsbeispiel gemäß Figur 2 sind gleiche Elemente mit gleichen Bezugszeichen gekennzeichnet. Der einzige Unterschied zum Ausführungsbeispiel gemäß Figur 1 besteht darin, daß das Bedienteil 65 mit einem Sender 120 verbunden ist und die zweite Speichereinrichtung 60 mit einem Empfänger 125. Dabei kann es sich beim Sender 120 um einen optischen Sender und beim Empfänger 125 um einen optischen Empfänger handeln, so daß es zwischen der Sitzeinstellvorrichtung 1 und dem Autoradio 55 zu einer optischen Übertragung, beispielsweise im Infrarotbereich kommt. Es ist jedoch auch möglich, den Sender 120 als Funksender und den Empfänger 125 als Funkempfänger auszubilden, so daß zwischen der Sitzeinstellvorrichtung 1 und dem Autoradio 55 eine Funkverbindung aufgebaut werden kann. Diese hat den Vorteil, daß sie auch bei Unterbrechung des optischen Übertragungsweges aufrecht erhalten bleibt. Beim Ausführungsbeispiel gemäß Figur 2 werden vom Sender 120 an den Empfänger 125 Signale ausgesendet, die entsprechend der Beschreibung des Ausführungsbeispiels nach Figur 1 einen Adressierungs- und Speichervorgang oder einen Adressierungs- und Aktiviervorgang in der zweiten Speichereinrichtung 60 des Autoradios 55 auslösen.

Zusätzlich zu den benutzerspezifischen Geräteeinstellungen des Autoradios 55 und den individuellen Einstellungen des Sitzes 5 können mittels der Bedienelemente 15, 20, 25, 30 des Bedienteils 65 auch individuelle Positionen des Aussenspiegels und des Innenspiegels des Kraftfahrzeugs sowie der Kopfstütze des Sitzes 5 gespeichert bzw. aktiviert werden. Die dazu erforderlichen Datensätze können dann ebenfalls in der ersten Speichereinrichtung 10 abgespeichert und ggf. mit den jeweiligen Datensätzen für die Sitzeinstellungen zu jeweils einem einzigen Gesamtdatensatz kombiniert werden.

Ist das Autoradio 55 bei Betätigung eines der Bedienelemente 15, 20, 25, 30 noch ausgeschaltet, so wird es durch diese Betätigung vor Aktivieren der benutzerspezifischen Geräteeinstellungen eingeschaltet.

Das Bedienteil 65 mit den Bedienelementen 15,.20, 25, 30 ist in vorteilhafter Weise an der Innenseite der Fahrertür oder am Sitz gelagert, so daß bereits beim Einsteigen des Benutzers in das Kraftfahrzeug die Bedienelemente 15, 20, 25, 30 betätigt werden können.

Statt eines Autoradios können auch andere Audiogeräte 55 auf die beschriebene Weise über das Bedienteil 65 benutzerspezifisch eingestellt werden. Dabei kann es sich beispielsweise um ein Kassettenabspielgerät oder um ein Kompakt-Disc-Abspielgerät handeln, wobei dann in den entsprechenden Speicherbereichen 35, 40, 45, 50 keine Frequenzen abgespeichert werden müssen, sondern lediglich Klangeinstellungen und ggf. eine Liste zu spielender Titel, bzw. Kompakt- Disc's, wenn es sich beim Kompakt- Disc-Abspielgerät um einen Kompakt- Disc-Wechsler handelt. Die Erfindung lässt sich auf beliebige Audiogeräte anwenden.

## Patentansprüche

1. Sitzeinstellvorrichtung (1) für einen mit einer Antriebsvorrichtung verstellbaren Sitz (5), mit einer zugeordneten ersten Speichereinrichtung (10) zum Speichern von Datensätzen für vorgegebene Einstellungen des Sitzes (5) und Mitteln (15, 20, 25, 30), mit deren Hilfe ein gewünschter Datensatz in der ersten Speichereinrichtung (10) adressierbar ist, **dadurch gekennzeichnet, daß** durch die Mittel (15, 20, 25, 30) mindestens ein Speicherbereich (35, 40, 45, 50) einer einem Audiogerät (55), vorzugsweise einem Autoradio, zugeordneten zweiten Speichereinrichtung (60) adressierbar ist.

2. Sitzeinstellvorrichtung (1) nach Anspruch 1, **dadurch gekennzeichnet, daß** eine Speichervorrichtung (15, 20, 25, 30) vorgesehen ist, mit deren Hilfe ein Signal zur Aktivierung eines Speichervorgangs gerade eingestellter Bedienfunktionen des Audiogerätes (55) in einem gerade adressierten Speicherbereich (35, 40, 45, 50) der zum Audiogerät (55) gehörenden zweiten Speichereinrichtung (60) abgebbar ist und eine erfaßte Sitzeinstellung in Form eines Datensatzes der mehreren optimalen Sitzeinstellungen in der ersten Speichereinrichtung (10) speicherbar ist.

3. Sitzeinstellvorrichtung (1) nach Anspruch 1 oder 2, **dadurch gekennzeichnet, daß** eine Aktiviervorrichtung (15, 20, 25, 30) vorgesehen ist, mit deren Hilfe ein Signal zur Aktivierung von in einem adressierten Speicherbereich (35, 40, 45, 50) der dem Audiogerät (55) zugeordneten zweiten Speichereinrichtung (60) abgelegten Bedienfunktionen abgebbar ist und eine optimale Einstellung des Sitzes (5) gemäß eines in der ersten Speichereinrichtung (10) adressierten Datensatzes einleitbar ist.

4. Sitzeinstellvorrichtung (1) nach einem der vorherigen Ansprüche, **dadurch gekennzeichnet, daß** die Abgabe von Signalen an das Audiogerät (55) drahtlos erfolgt.

5. Audiogerät (55), insbesondere Autoradio, mit einer zugeordneten Speichereinrichtung (60), in der benutzerspezifische Geräteeinstellungen abspeicherbar sind, **dadurch gekennzeichnet, daß** mindestens ein Speicherbereich (35, 40, 45, 50) in der Speichereinrichtung (60) vorgesehen ist, daß der mindestens eine Speicherbereich (35, 40, 45, 50) des Audiogerätes (55) über ein extern von einer Sitzeinstellvorrichtung (1) zugeführtes Signal adressierbar ist.

6. Audiogerät nach Anspruch 5, **dadurch gekennzeichnet, daß** Geräteeinstellungen über ein extern von der Sitzeinstellvorrichtung (1) zugeführtes Signal in einem adressierten Speicherbereich (35, 40, 45, 50) abspeicherbar sind.

7. Audiogerät nach Anspruch 5 oder 6, **dadurch gekennzeichnet, daß** in einem adressierten Speicherbereich (35, 40, 45, 50) abgespeicherte Geräteeinstellungen über ein extern von der Sitzeinstellvorrichtung (1) zugeführtes Signal am Audiogerät (55) aktivierbar sind.

8. Audiogerät nach Anspruch 5, 6 oder 7, **dadurch gekennzeichnet, daß** die externen von der Sitzeinstellvorrichtung (1) zugeführten Signale dem Audiogerät (55) drahtlos zugeführt sind.

## Claims

1. Seat adjusting apparatus (1) for a seat (5) which can be moved using a drive apparatus, having an associated first memory device (10) for storing data records for prescribed settings of the seat (5) and means (15, 20, 25, 30) which can be used to address a desired data record in the first memory device (10), **characterized in that** the means (15, 20, 25,. 30) can address at least one memory area (35, 40, 45, 50) in a second memory device (60) which is associated with an audio appliance (55), preferably a car radio.

2. Seat adjusting apparatus (1) according to Claim 1, **characterized in that** a memory apparatus (15, 20, 25, 30) is provided which can be used to output a signal for activating a storage operation for currently set control functions of the audio appliance (55) in a currently addressed memory area (35, 40, 45, 50) in the second memory device (60) associated with the audio appliance (55) and to store a detected seat setting in the form of a data record for the plurality of optimum seat settings in the first memory device (10).

3. Seat adjusting apparatus (1) according to Claim 1 or 2, **characterized in that** an activating apparatus (15, 20, 25, 30) is provided which can be used to output a signal for activating control functions stored in an addressed memory area (35, 40, 45, 50) in the second memory device (60) associated with the audio appliance (55) and to initiate optimum adjustment of the seat (5) in line with a data record addressed in the first memory device (10).

4. Seat adjusting apparatus (1) according to one of the preceding claims, **characterized in that** signals are output to the audio appliance (55) wirelessly.

5. Audio appliance (55), particularly car radio, having an associated memory device (60) which can store user-specific appliance settings, **characterized in that** at least one memory area (35, 40, 45, 50) is provided in the memory device (60) , **in that** the at least one memory area (35, 40, 45, 50) in the audio appliance (55) can be addressed by means of a signal supplied externally by a seat adjusting apparatus (1).

6. Audio appliance according to Claim 5, **characterized in that** appliance settings can be stored in an addressed memory area (35, 40, 45, 50) using a signal supplied externally by the seat adjusting apparatus (1).

7. Audio appliance according to Claim 5 or 6, **characterized in that** appliance settings stored in an addressed memory area (35, 40, 45, 50) can be activated on the audio appliance (55) using a signal supplied externally by the seat adjusting apparatus (1).

8. Audio appliance according to Claim 5, 6 or 7, **characterized in that** the external signals supplied by the seat adjusting apparatus (1) are supplied to the audio appliance (55) wirelessly.

## Revendications

1. Dispositif de réglage d'un siège (1) pour un siège (5) ajustable par un dispositif d'actionnement, avec un premier organe de mémoire associé (10) pour l'enregistrement de jeux de données pour des réglages prédéfinis du siège (5), et des moyens (15, 20, 25, 30) à l'aide desquels un jeu de données souhaité peut être adressé dans le premier organe de mémoire (10),
**caractérisé en ce que**
par les moyens (15, 20, 25, 30), au moins une zone de mémoire (35, 40, 45, 50) d'un deuxième organe de mémoire (60), associée à un appareil audio (55), de préférence un autoradio, peut être adressée.

2. Dispositif de réglage d'un siège (1) selon la revendication 1,
**caractérisé en ce qu'**
un dispositif de mémoire (15, 20, 25, 30) est prévu, à l'aide duquel un signal pour l'activation d'une opération d'enregistrement de fonctions de commande de l'appareil audio (55) qui viennent d'être réglées peut être fourni dans une zone de mémoire (35, 40, 45, 50) qui vient d'être adressée du deuxième organe de mémoire (60) appartenant à l'appareil audio (55), et le réglage d'un siège qui a été saisi peut être enregistré sous la forme d'un jeu de données des différents réglages de siège optimaux dans le premier organe de mémoire (10).

3. Dispositif de réglage d'un siège (1) selon la revendication 1 ou 2,
**caractérisé en ce qu'**
un dispositif d'activation (15, 20, 25, 30) est prévu, à l'aide duquel un signal pour l'activation de fonctions de commande distribuées dans une zone de mémoire adressée (35, 40, 45, 50) du deuxième organe de mémoire (60) associé à l'appareil audio (55) peut être fourni, et un réglage optimal du siège (5) selon un jeu de données adressé dans le deuxième organe de mémoire (10) peut être introduit.

4. Dispositif de réglage d'un siège (1) selon l'une des revendications précédentes,
**caractérisé en ce que**
la fourniture de signaux à l'appareil audio (55) s'effectue sans fils.

5. Appareil audio (55) en particulier autoradio, avec un organe de mémoire associé (60), dans lequel des réglages d'appareils spécifiques à l'utilisateur peuvent être enregistrés,
**caractérisé en ce qu'**
au moins une zone de mémoire (35, 40, 45, 50) est prévue dans l'organe de mémoire (60), et au moins une zone de mémoire (35, 40, 45, 50) de l'appareil audio (55) peut être adressée par un signal amené de l'extérieur par un dispositif de réglage d'un siège (1).

6. Appareil audio selon la revendication 5,
**caractérisé en ce que**
les réglages d'appareils peuvent être enregistrés par un signal amené de l'extérieur par le dispositif de réglage d'un siège (1), dans une zone de mémoire adressée (35, 40, 45, 50).

7. Appareil audio selon la revendication 5 ou 6,
**caractérisé en ce que**
les réglages d'appareils enregistrés dans une zone de mémoire adressée (35, 40, 45, 50) peuvent être activés dans l'appareil audio (55) par un signal amené de l'extérieur par le dispositif de réglage d'un siège (1).

8. Appareil audio selon la revendication 5, 6 ou 7,
**caractérisé en ce que**
les signaux fournis à l'appareil audio (55) de l'extérieur par le dispositif de réglage d'un siège (1) sont amenés sans fils.
